Europäisches Patentamt

European Patent Office

Office européen des brevets

(19)

(11) Veröffentlichungsnummer: **0 245 652 B1**

## EUROPÄISCHE PATENTSCHRIFT

(45) Veröffentlichungstag der Patentschrift: **06.03.91**

(51) Int. Cl.⁵: **B01D 53/34**

(21) Anmeldenummer: **87105197.5**

(22) Anmeldetag: **08.04.87**

(54) Verfahren zur Reinigung von Abgasen.

(30) Priorität: **08.04.86 DE 3611769**

(43) Veröffentlichungstag der Anmeldung:
**19.11.87 Patentblatt 87/47**

(45) Bekanntmachung des Hinweises auf die
Patenterteilung:
**06.03.91 Patentblatt 91/10**

(84) Benannte Vertragsstaaten:
**AT BE CH DE FR GB IT LI NL SE**

(56) Entgegenhaltungen:
**EP-A- 0 111 878**
**BE-A- 840 844**
**DE-A- 2 755 314**

**PATENT ABSTRACTS OF JAPAN, Band 7, Nr.
289 (C-202)[1434], 23. Dezember 1983; & JP -
A - 58 166 933 (ONODA CEMENT K.K.)
03.10.1983**

(73) Patentinhaber: **YTONG AG**
**Hornstrasse 3**
**W-8000 München 40(DE)**

(72) Erfinder: **Hums, Dieter, Dr. Ing.**
**Ferdinand-Zink-Strasse 1**
**W-8898 Schrobenhausen(DE)**

(74) Vertreter: **Patentanwälte Dr. Solf & Zapf**
**Zeppelinstrasse 53**
**W-8000 München 80(DE)**

## Beschreibung

Die Erfindung betrifft ein Verfahren nach dem Oberbegriff des Anspruchs 1.

Die Abgase aus Öfen der keramischen Industrie enthalten beträchtliche Mengen von aus den Rohstoffen und den Brennmitteln stammenden anorganischen Schadstoffen, die insbesondere gas- und staubförmig anfallen und möglichst nicht emittiert werden sollen. Es handelt sich im wesentlichen um Fluorverbindungen (HF) und Schwefelverbindungen ($SO_2$, $SO_3$).

In der Zeitschrift "ZIEGELINDUSTRIE INTERNATIONAL" 2/84, Seite 74 bis 94 und 5/84, Seite 244 bis 256 werden bekannte Verfahren und Vorrichtungen der Rauchgasreinigung in der Ziegelindustrie beschrieben. U.a. wird ein Verfahren mehrfach beschrieben, das nach der Trockensorptionsmethode arbeitet und bei dem ein Schüttschichtfilter aus Kalksteinsplitt ($CaCO_3$) verwendet wird. In der Schüttschicht aus körnigem Kalkstein wird hauptsächlich HF sorbiert und Staub abgelagert. $SO_2$ und $SO_3$ sowie die organischen Schadstoffe und die Stickoxide werden nur in geringen Mengen gebunden. Will man diese Schadstoffe auch mit etwa dem gleichen Abscheidegrad aus den Abgasen entfernen, müssen aufwendigere Naß- oder Filterverfahren eingesetzt werden.

Aus der DE-OS 34 24 684 ist ein Verfahren zum Reinigen von industriellen Abgasen bekannt, wobei die Abgase durch ein Filter, insbesondere ein Schlauchfilter, geleitet werden. Den ungereinigten Abgasen soll vor dem Filter Calciumhydrosilikat-Granulat bzw. -Pulver mit einem Korngrößenbereich von 0,1 bis 1 mm zugegeben werden. Das Calciumhydrosilikat soll als Filterhilfsmittel wirken. Es kann durch feines Vermahlen von Gas- oder Schaumbeton-Abfällen erzeugt werden. Es sollen insbesondere Aldehyde ab- bzw. adsorptiv oder auch chemiesorptiv gebunden werden. Auch das im zu reinigenden Abgas enthaltene Öl soll in dem Calciumhydrosilikat-Granulat gebunden werden, ohne daß letzteres hierbei schmierig oder klebrig wird. Durch die Bindung des Öls im Calciumhydrosilikat-Granulat wird das Öl von den Filterschläuchen ferngehalten, so daß der Strömungswiderstand durch Ölrückstände nicht beeinträchtigt wird. Aus der DE-OS 34 24 684 ergibt sich somit, daß mit einem Calciumhydrosilikat-Granulat im Korngrößenbereich bis 1 mm Ölrückstände, Staub und Aldehyde aus Abgasen entfernt werden können, wenn man das Granulat dem ungereinigten Abgas vor dem Filter zusetzt und das Gemisch mit einem Filter auffängt. Dabei ist jedoch der Wirkungsgrad nicht sehr hoch, wenn man berücksichtigt, daß der Aldehydgehalt eines Abgases von 3 mg/m³ lediglich auf 0.8 bis 1 mg/m³ gesenkt werden konnte. Die Verwendung des Calciumhydrosilikat-Granulats erbringt wohl daher in erster Linie für Öl- und Staubbindung Vorteile.

Aus der EP-A-0 111 878 ist ein Verfahren zur Herstellung einer bestimmten Masse zu entnehmen, bei der mineralische Naturprodukte und/oder industrielle Produkte mit frisch gebildetem Calziumsilikathydrat belegt werden. Wie derartige Produkte bei der selektiven Entfernung von HF und/oder $SO_2$ und/oder $SO_3$ aus Abgasen wirken kann nicht vorhergesehen werden. Die Masse besteht aus den angegebenen Naturprodukten oder industriellen Produkten, die mit Calziumsilikathydrat belegt sind. Es ist zu befürchten, daß in einem Schüttschichtfilter dieses bekannte Produkt nicht wirkt, weil ein dünner Belag dem Abrieb unterliegt und verloren gehen kann und außerdem nicht genügend Calziumsilikathydrat zur Verfügung steht.

Es ist aus DE-A-2 902 109 bekannt, daß ein im wesentlichen aus CSH bestehendes Granulat, das durch entsprechendes Zerkleinern von Leichtbauplatten gewonnen wird, zur Ad- bzw. Absorption von Flüssigkeiten und Gasen verwendet werden kann. Im allgemeinen beträgt die Größe der Porenradien der Leichtbauplatten bzw. des Granulats weniger als 60 $\mu$m, vorzugsweise weniger als 25 $\mu$m, insbesondere weniger als 15 $\mu$m.

Aufgabe der Erfindung ist, ein Trockensorptionsverfahren zu schaffen, das bezüglich der Fluorverbindungen noch effektiver ist und mit dem insbesondere auch $SO_2$ und $SO_3$ nahezu vollständig aus den Abgasen entfernt werden können.

Diese Aufgabe wird durch die Merkmale des Anspruchs 1 gelöst. Beim erfindungsgemäßen Verfahren wird ein körniges Mikro- und Makroporen aufweisendes Calciumsilikathydratprodukt als Schüttschichtfilter verwendet. Dieses Produkt ist somit wesentlich leichter als Kalksteinsplitt. Von daher bot sich das Calciumsilikathydratprodukt nicht ohne weiteres an, weil man bisher bedacht war, ein möglichst schweres Schüttschichtfiltergut dem Gasstrom entgegenzusetzen. Durch die hohe Porosität des Calciumsilikathydratprodukts wird dieser Mangel offenbar kompensiert, indem dem Gas eine durchströmbare Porosität angeboten wird, die volumenmäßig größer ist als beim Kalksteinsplitt.

Wichtig ist, daß das Calciumsilikathydratprodukt raumformmäßig aus Makro- und Mikroporen aufgebaut ist und die Makroporen von 30 bis 60 Vol.-% und die Mikroporen von 30 bis 60 Vol.-% einnehmen.

Das Calciumsilikathydratprodukt kann im getrockneten Zustand verwendet werden. Es kann aber auch mit Vorteil mit einem Feuchtigkeitsgehalt bis zu 30 Gew.-% verwendet werden, wobei insbesondere bestimmte Feuchtigkeitsgehalte für die Sorption bestimmter Schadstoffe besonders wirksam sind.

Es ist derzeit noch nicht bekannt, warum das erfindungsgemäß verwendete Calciumsilikathydratprodukt

2

sowohl HF als auch $SO_2$ und $SO_3$ nahezu vollständig sorbiert. Denkbar ist, daß die Einwirkung der Abgastemperaturen zwischen 70 und 200°C und/oder ein Schadstoff und/oder mehrere Schadstoffe und/oder eine Dehydratisierung einer Calciumsilikathydratphase die Sorption bewirken bzw. fördern und/oder Kristallwasseraustreibung mit einer Umbildung von Calciumsilikathydratphasen wirksam werden. Möglicherweise ergibt sich eine besonders hohe Affinität der Calciumsilikathydratphasen zu den genannten Schadstoffen im stadium nascendi der Umbildung zu anderen Calciumsilikathydratphasen während des Kontakts mit den Schadstoffen, so daß insbesondere die Schadstoffe HF, $SO_2$ und $SO_3$ vollständig gebunden werden. Bei einer Reaktion mit den Schadstoffen kann auch amorphe Kieselsäure zur Verfügung stehen, die besonders reaktiv ist. Auch angeätzte Quarzkornoberflächen tragen sicherlich zur effektiven Sorption bei. Es war jedoch überraschend, daß alle drei Schadstoffe gleichermaßen gut sorbiert werden können, was beim Stand der Technik mit Kalksteinsplitt oder Kalkhydrat nicht möglich war.

Das Calciumsilikathydratprodukt, das nahezu quarzfrei ist und vollständig aus Calciumsilikathydratphasen, insbesondere kalkreichen Calciumsilikathydratphasen, besteht, Wird nach dem Gasbetonherstellungsverfahren produziert.

Anhand des folgenden Beispiels wird die Erfindung näher erläutert.

Der Schüttschichtfilter eines sogenanntenKaskaden-Absorbers, der mit einer Poroton®-Anlage kombiniert war, wurde mit getrocknetem Gasbetongranulat einer Körnung von 1,5 bis 5 mm gefüllt. Die Schüttdichte betrug 0,4 $g/cm^3$. Insgesamt wurden zehn Kubikmeter Granulat verwendet. Durch die Schüttung wurde ein Abgas gezogen, das 70°C warm war und die folgende Zusammensetzung aufwies:

| Substanz | Emiss. Vers. $mg/m^3$ |
|---|---|
| Fluorwasser | 200 |
| $SO_3/SO_2$ | 500 |

In den drei Meßreihen wurden das Abgas und das gereinigte Gas (Reingas) analysiert. Die Ergebnisse sind in der folgenden Tafel zusammengestellt:

|  | 1. Reihe Rohgas | Reingas | 2. Reihe Rohgas | Reingas | 3. Reihe Rohgas | Reingas |
|---|---|---|---|---|---|---|
| Fluorverb. | 79,8 | 0,72 | 223 | 0,12 | 173 | 0,12 |
|  | 39,6 | 0,24 | 123 | 0,12 | 185 | 0,12 |
|  | 64,1 | 0,24 | 162 | 0,12 | 247 | 0,24 |
| $SO_3$ | 35,3 | < 3 | 38,6 | < 3 | 45,8 | < 3 |
|  | 40,8 | < 3 | 39,4 | < 3 | 38,6 | < 3 |
|  | 41,8 | < 3 | 40,2 | < 3 | 43,4 | < 3 |
| $SO_2$ | 520 | < 1 | 392 | < 1 | 433 | < 1 |
|  | 322 | < 1 | 460 | < 1 | 379 | < 1 |
|  | 406 | < 1 | 276 | < 1 | 478 | < 1 |

Aus den Ergebnissen ist zu erkennen, daß HF, $SO_2$ und $SO_3$ praktisch zu 100% eliminiert werden konnten.

Durch höhere Rauchgastemperaturen kann die Sorption noch verbessert werden. Insofern kann auch die Ausbeute des Granulats erhöht werden, d.h. der Verbrauch pro $cm^3$ Abgas erniedrigt werden.

Ein besonders überraschender Vorteil ist, daß das mit den Schadstoffen angereicherte Granulat bei der Gasbetonproduktion wieder verwendet werden kann, z.B. als Sulfatersatz. Die Reaktionsprodukte stören dabei nicht den Gasbetonherstellungsprozeß oder die Güte der Gasbetonprodukte bzw. deren Verwendung.

Alle bisher verwendeten Schüttschichtgranulate mußten nach der Sorption deponiert werden, so daß die Erfindung auch insoweit einen ganz erheblichen technologischen Fortschritt schafft.

Das erfindungsgemäß verwendete Calciumsilikathydratprodukt weist eine besonders gute Durchströmbarkeit des Schüttschichtfilters auf, so daß das geringe Schüttgewicht kompensiert wird und die Abgase mit nahezu gleichem dynamischen Druck durch die Schüttung gedrückt werden können wie bei Verwendung von Kalksteinsplitt.

Mit dem erfindungsgemäß verwendeten Calciumsilikathydratprodukt können mehr Schadstoffe sorbiert werden, als z.B. das im Produkt vorhandene CaO zur chemischen Bindung von HF zu $CaF_2$ oder von $SO_2$ bzw. $SO_3$ zu $CaSO_4$ zur Verfügung stellt. Dieses Phänomen ist überraschend und auch noch nicht geklärt. Bei der Verwendung von Kalksteinsplitt oder Kalkhydrat wird nicht einmal soviel Schadstoff sorbiert, wie vom CaO in diesen Produkten gebunden werden könnte. Es liegen bei der Sorption mit einem CSH-Produkt offenbar andere Bedingungen vor als bei Verwendung von Kalksteinsplitt oder Kalkhydrat.

Z.B. kann auch ein Gemisch aus einem Calciumsilikathydratprodukt und Kalksteinsplitt und/oder Kalkhydrat verwendet werden, wenn besondere Bedingungen den Einsatz der anderen bekannten Produkte erfordern.

Das Calciumsilikathydratprodukt kann in all den im oben angegebenen Stand der Technik beschriebenen Rauchgasreinigungsvorrichtungen als Schüttschichtfilter verwendet werden, wobei sich zwischen der Abgaszuleitung und der Reingasableitung ein Calciumsilikathydratschüttschichtfilter befindet.

Die Erfindung wird dort angewendet, wo Abgase zu reinigen sind, die nach den Emissionsvorschriften unzulässige Mengen an den genannten Schadstoffen aufweisen.

## Ansprüche

1. Verfahren zur Reinigung von Abgasen, insbesondere von Abgasen aus Öfen der keramischen Industrie, die unzulässige Mengen anorganischer Schadstoffe in Form von HF und/oder $SO_2$ und/oder $SO_3$ enthalten,
dadurch **gekennzeichnet,**
daß die Abgase durch einen Schüttschichtfilter gesaugt oder gedrückt werden, das ein Calciumsilikathydrat-Granulat aufweist, vorzugsweise aus einem CalciumsilikathydratGranulat besteht, wobei ein Granulat verwendet wird, bei dem die Granulatkörner das Calciumsilikathydrat und einen Mikroporengehalt von 30 bis 60 Vol.-% sowie einen Makroporengehalt von 60 bis 30 Vol.-% aufweisen.

2. Verfahren nach Anspruch 1,
dadurch **gekennzeichnet,**
daß ein Granulat verwendet wird, das verschiedene Calciumsilikathydrate aufweist.

3. Verfahren nach Anspruch 1 und 2,
dadurch **gekennzeichnet,**
daß das Granulat in einer Körnung von 1,5 bis 10 mm, vorzugsweise 3 bis 8 mm, verwendet wird.

4. Verfahren nach einem oder mehreren der Ansprüche 1 bis 3,
dadurch **gekennzeichnet,**
daß ein Granulat verwendet wird, dessen spezifische Oberfläche zwischen 20 und 150 $m^2/g$ liegt.

5. Verfahren nach einem oder mehreren der Ansprüche 1 bis 4,
dadurch **gekennzeichnet,**
daß ein Granulat verwendet wird, dessen Granulatkörper Makroporen aufweisen, deren Porenradien im Bereich zwischen 1 und 4 mm liegen.

6. Verfahren nach einem oder mehreren der Ansprüche 1 bis 5,
dadurch **gekennzeichnet,**
daß ein Granulat verwendet wird, dessen Granulatkörner Mikroporen aufweisen, deren Porenradien zwischen 0,01 und 100 um liegen.

7. Verfahren nach einem oder mehreren der Ansprüche 1 bis 6,
dadurch **gekennzeichnet,**
daß ein Granulat verwendet wird, dessen Schüttdichte zwischen 0,2 und 0,6 $g/cm^3$ liegt.

8. Verfahren nach einem oder mehreren der Ansprüche 1 bis 7,
dadurch **gekennzeichnet,**

daß als Granulat ein Gas- oder Schaumbetongranulat verwendet wird.

9. Verfahren nach einem oder mehreren der Ansprüche 1 bis 7,
dadurch **gekennzeichnet,**
daß ein Granulat verwendet wird, dessen Körner überwiegend kalkreiche Calciumsilikathydratphasen aufweisen.

10. Verfahren nach einem oder mehreren der Ansprüche 1 bis 9,
dadurch **gekennzeichnet,**
daß ein Granulat verwendet wird, das bis zu 30 Gew.-% Feuchtigkeit aufweist.

**Claims**

1. A process for the purification of waste gases, in particular of the waste gases from furnaces in the ceramics industry, which contain unacceptable quantities of harmful inorganic pollutants ln the form of HF and/or $SO_2$ and/or $SO_3$, characterised in that the waste gases are drawn or blown through a packed filter which comprises a hydrated calcium silicate granulate, preferably a hydrated calcium silicate granulate, in which a granulate grain fineness of the hydrated calcium silicate has a micropore content of 30 to 60% by volume and a macropore content of 60 to 30% by volume, is used.

2. A process according to Claim 1, characterised in that a granulate which comprises different hydrated calcium silicates, is used.

3. A process according to Claim 1 and 2 characterised in that the granulate having a particle size of between 1.5 and 10 mm, preferably between 3 and 8 mm, is used.

4. A process according to one or more of Claims 1 to 3, characterised in that a granulate which has a specific surface area between 20 and 150 $m^2$/g, is used.

5. A process according to one or more of Claims 1 to 4 characterised in that a granulate in which the particles of the granulate have macropoles whose pore radii lie in the range between 1 and 4 mm, is used,

6. A process according to one or more of Claims 1 to 50, characterised in that a granulate in which the particles of the granulate have micropores having a pore radii of between 0.01 and 100 $\mu$m, is used.

7. A process according to one or more of Claims 1 to 6, characterised in that a granulate having a bulk density of between 0.2 and 0.6 g/$cm^3$ is used,

8. A process according to one or more of Claims 1 to 7, characterised in that an aerated or foamed concrete granulate is used as the granulate.

9. A process according to one or more of Claims 1 to 7, characterised in that a granulate is used in which the particles consist predominantly of calcium-rich hydrated calcium silicate phases.

10. a process according to one or more of claims 1 to 9 characterised in that a granulate is used which contains up to 30% by weight of moisture.

**Revendications**

1. Procédé pour l'épuration des gaz résiduaires, en particulier des gaz résiduaires de fours de l'industrie céramique qui contiennent des quantités inadmissibles de substances minérales nocives sous forme de HF et/ou de $SO_2$ et/ou de $SO_3$, caractérisé en ce que l'on aspire ou envoie sous pression les gaz résiduaires à travers un filtre à lit tassé, qui présente un granulé de silicate de calcium hydraté, qui se compose de préférence d'un granulé de silicate de calcium hydraté, en utilisant un granulé dans lequel les grains du granulé présentent le silicate de calcium hydraté et une teneur en micropores de 30 à 60 % en volume ainsi qu'une teneur en macropores de 60 à 30 % en volume.

2. Procédé selon la revendication 1, caractérisé en ce qu'on utilise un granulé qui présente divers silicates de calcium hydratés.

3. Procédé selon les revendications 1 ou 2, caractérisé en ce que le granulé est utilisé dans une granularité de 1,5 à 10 mm, de préférence de 3 à 8 mm.

4. Procédé selon l'une quelconque des revendications 1 à 3, caractérisé en ce qu'on utilise un granulé dont la surface spécifique est comprise entre 20 et 150 $m^2/g$.

5. Procédé selon l'une quelconque des revendications 1 à 4, caractérisé en ce qu'on utilise un granulé dont les grains présentent des micropores dont les rayons sont compris entre 1 et 4 mm.

6. Procédé selon l'une quelconque des revendications 1 à 5, caractérisé en ce qu'on utilise un granulé dont les grains présentent des micropores dont les rayons sont compris entre 0,01 et 100 $\mu$m.

7. Procédé selon l'une quelconque des revendications 1 à 6, caractérisé en ce qu'on utilise un granulé dont la masse volumique apparente est comprise entre 0,2 et 0,6 $g/cm^3$.

8. Procédé selon l'une quelconque des revendications 1 à 7, caractérisé en ce qu'on utilise comme granulé, un granulé de béton ou gaz ou de béton expansé.

9. Procédé selon l'une quelconque des revendications 1 à 7, caractérisé en ce qu'on utilise un granulé dont les grains présentent principalement des phases silicate de calcium hydraté riches en chaux.

10. Procédé selon l'une quelconque des revendications 1 à 9, caractérisé en ce qu'on utilise un granulé qui présente jusqu'à 30 % en poids d'humidité.